# EUROPEAN PATENT APPLICATION

(11) **EP 1 286 501 A1**
(43) Date of publication of application: **26.02.2003**
(21) Application number: 01402205.7
(22) Date of filing: 22.08.2001
(51) Int. Cl.: H04L 12/28, H04L 12/46, H04L 12/66

(54) **Method for bridging a UPNP network and a HAVI network**

(71) Applicant: Thomson Licensing S.A., 92100 Boulogne-Billancourt (FR)
(72) Inventor: Henry, M. Jean-Baptiste, 35520 Melesse (FR); Burklin, M. Helmut, 35000 Rennes (FR)
(74) Representative: Kohrs, Martin

(57) **Abstract**

The invention concerns a method for bridging a HAVi network and a UPnP network, in which both networks are connected to a bridge device (5) representing software elements from one network on the other network, comprising, at the level of the bridge device. The method comprises the steps of:
- detecting UPnP devices (13) connected to the UPnP network;
- creating a proxy HAVi device control module (8) for each UPnP device (13) for representing the UPnP devices (13) on the HAVi network.

The method is characterized by the step of :
- registering the proxy HAVi device control modules (8), wherein the proxy HAVi device control modules (8) are declared as being of the legacy device type.

## Description

The invention concerns a method for bridging a UPnP and a HAVi network. It applies in particular to the field of domestic communication networks.

The bridge's functions include representing HAVi software elements (device control modules and functional component modules, for example) on the UPnP network, and representing UPnP devices and services on the HAVi network.

According to the HAVi specification, each device on a HAVi network has to possess a configuration memory, from which certain descriptive data can be read ('SDD' data for Self-Describing Data').

The proxy devices of the bridge representing the UPnP devices are not real-world devices, and thus do not have such a configuration memory.

The patent application WO 0076131 filed in the name of THOMSON multimedia on May 31, 2000 and published on December 14, 2000 concerns a device and method for bridging a HAVi (Home Audio/Video interoperability) network and a UPnP (Universal Plug and Play) network.

The invention concerns a method for bridging a HAVi network and a UPnP network, both networks being connected to a bridge device representing software elements from one network on the other network, comprising, at the level of the bridge device, the steps of:
- detecting UPnP devices connected to the UPnP network;
- creating a proxy HAVi device control module for each UPnP device for representing the UPnP devices on the HAVi network;
characterized by the step of:
- registering the proxy HAVi device control modules, wherein the proxy HAVi device control modules are declared as being of the legacy device type.

Since the UPnP devices are represented as legacy (LAV) devices on the HAVi network, other HAVi devices do not expect any configuration memory to be present in these devices.

According to an embodiment of the invention, the method further comprises the steps of:
- detecting at least certain types of UPnP services on the UPnP network;
- creating a proxy HAVi functional component module for each detected UPnP service, wherein a proxy HAVi functional component module representing a given UPnP service is integrated into a proxy HAVi device control module representing the UPnP device associated with the UPnP service on the UPnP network;
- announcing the proxy HAVi functional component modules.

According to an embodiment of the invention, the method further comprises the steps of:
- detecting HAVi device control modules and HAVi functional component modules on the HAVi network;
- creating a proxy UPnP device for each HAVi device control module and a UPnP service for each HAVi functional component module;
- announcing the proxy UPnP devices and services according to UPnP rules.

According to an embodiment of the invention, proxy HAVi software elements representing UPnP devices and/or services are declared as being of the non-61883 type.

According to an embodiment of the invention, the method further comprises the steps of, before registration of a proxy software element, requesting descriptive data relative to the proxy software element and of registering the proxy software element only after reception of the descriptive data.

Other characteristics and advantages of the invention will appear through the description of a non-restrictive embodiment, explained with the help of the enclosed figures, among which:
Figure 1 is a block diagram of a network comprising a HAVi-UPnP bridge device.
Figure 2 is a block diagram of the network of figure 1 comprising a HAVi device but before connection of a UPnP device.
Figure 3 is a block diagram of the network of figure 4 during the announcement phase of a UPnP device.
Figure 4 is a block diagram of the network of figure 5 after creation of a DCM and of an FCM for the UPnP device.
Figure 5 is a block diagram of the network of figure 6 detailing the flow of messages when the UPnP device is controlled by the HAVi device.
Figure 6 is a block diagram of the network of figure 1 and of the steps used in the present embodiment to establish a connection over the bridge when initiated by a HAVi device.
Figure 7 is a block diagram of the network and of the steps used in the present embodiment to establish a connection over the bridge when initiated by a UPnP device.

According to the present embodiment, a bridge device links a HAVi network and a UPnP network. HAVi stands for 'Home Audio Video interoperability' and defines a software stack for controlling a home network, especially based on IEEE 1394 busses. The current version of the HAVi specification is v1.1, published May 15, 2001 and available from HAVi, Inc., 2694 Bishop Drive, Suite 275 San Ramon, CA 94583, USA. UPnP stands for 'Universal Plug and Play' and also provides a network control software stack, based on the Internet Protocol (IP). The UPnP specification can be obtained from the UPnP forum managed by Microsoft Inc..

Be it in a HAVi network or a UPnP network, applications and other elements must be able to determine available functionalities.

In a HAVi network, a functionality is represented by a software element called FCM (Functional Control Module). Hierarchically speaking, a FCM is always contained in a DCM (Device Control Module), representing a device. A DCM can contain more than one FCM (for example a DCM representing a digital VCR contains a Tuner FCM and a VCR FCM). There is only one DCM for each device.

In a HAVi network, if a software element wants to offer its functionality to the network, it has to register itself with a local software element called the 'Registry'. When an FCM is created (it can be at device boot time or at run time― e.g. download of a DCM control unit or 'DCU'), it registers itself in the Registry of its own device.

When an application wants to know which services are available in the network, it sends a query to all Registries of the network.

Furthermore, a system of events exists for software elements created dynamically while the system is running. The Registry can make use of two events in order to announce the registration or removal of a software element: NewSoftwareElement (to indicate that a software element has just been registered) and GoneSoftwareElement (to indicate that a software element has just been unregistered). No polling is necessary in the HAVi network.

If a software element is newer than a HAVi Registry (i.e. the software element is of unknown type), it will still be recognized and shown as a new functionality on the HAVi network.

UPnP does not integrate a notion similar to the HAVI Registry. Nevertheless, in a UPnP network, services of devices may be announced on the network. For this purpose, UPnP uses 'HTTP over UDP for multicast' (HTTPMU). It is also possible for an application to search for a service on the network. The service discovery protocol is SSDP (Simple Service Discovery Protocol). It can be combined with the GENA protocol (General Event Notification Architecture) for event notification. When an application wants to know which services are available, it sends a SSDP discover multicast message. The services which match the request have to send back a response in unicast mode (HTTPU). The query can be very broad (e.g. all services) or more limited (e.g. a certain type of service).

When a service is new on the network, it has to send a GENA-SSDP 'alive' multicast message to announce its presence.

The alive message and the discover response message contain an age limit ('max-age') field. The maximum age field represents, in seconds, the validity of the service. If the service is still present after this time, another alive message must be sent by the service (or another discover query is made).

In UPnP networks, control is carried out using Simple Object Access Protocol (SOAP) messages.

The role of the bridge device is to connect both networks in such a way as to translate messages from one side to the other, in order to enable any device of one network to communicate with any device of the other network. The bridge should also be able to pass streams.

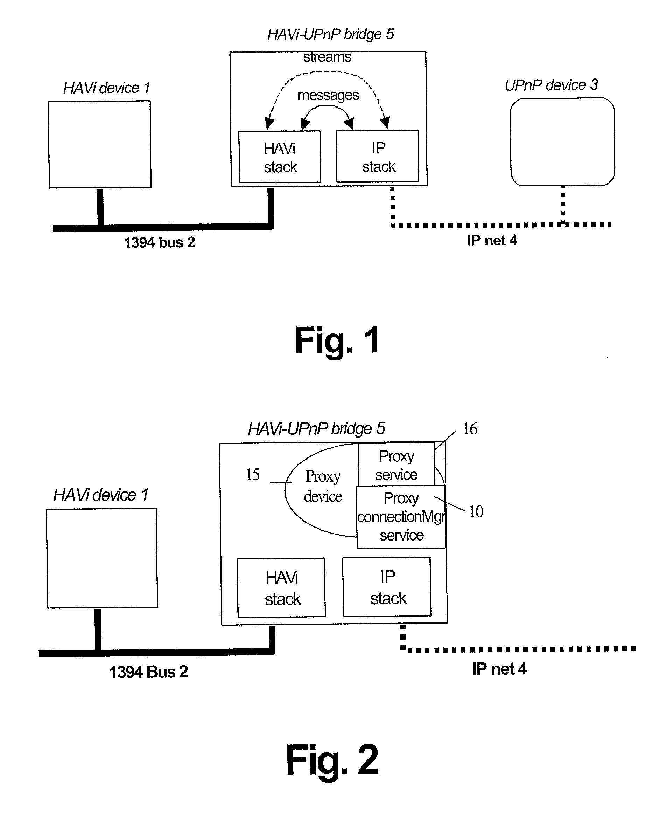

Figure 1 gives an example of a HAVi network comprising a HAVi device 1 connected to an IEEE 1394 bus 2, this HAVi network being connected to a UPnP network comprising a UPnP device 3 connected to an IP net 4, both networks being linked by a bridge device 5. The bridge 5 comprises a HAVi protocol stack, an IP protocol stack, as well as software for carrying out the translation or mapping of control messages, events, streams, ... from one network to the other.

According to the present embodiment, the bridge is to be transparent to devices and applications.

According to the present embodiment, a UPnP device is represented by a HAVi DCM, while a UPnP service is represented by a HAVi FCM within the DCM representing the UPnP device linked to the service. Conversely, a HAVi DCM is represented by a UPnP device and a HAVi FCM is represented by a service associated with the device representing the DCM containing this FCM. The software elements created by the bridge are called 'proxy' software elements in what follows.

It is the bridge's function to represent devices as appropriate on each network: for each DCM or FCM on the HAVi network, it will create a UPnP device or a UPnP service. Conversely, for each UPnP device, respectively service, the bridge creates a HAVi DCM, respectively FCM.

The bridge device is responsible for updating the representation of each network whenever a service, device, FCM or DCM is added or removed.

Depending on the configuration of each network, a bridge may manage several HAVi DCMs representing UPnP devices. It may also manage its own DCM, since the bridge device may itself have a function other than its bridge function. For example, the bridge function can be included in a device such as a television receiver or a satellite decoder.

According to the HAVi specification and in conformity with the IEEE 1212 standard, each HAVi device ― which is a IEEE 1394 device - comprises a configuration memory. HAVi and IEEE 1394-2000 define a number of parameters held in this memory. In The parameters defined by HAVi are called self-describing data, or'SDD', and may be read by another device. DCMs of the bridge representing UPnP devices do not represent real IEEE 1394 devices, and thus do not have a configuration memory conforming to HAVi/IEEE 1394 which could contain SDD data.

In order to avoid this issue, DCMs created by the bridge to represent UPnP devices are declared as legacy devices ('LAV' or Legacy Audio/Video devices). These devices, which may or may not be IEEE 1394 devices, are considered as not being HAVi compliant, and are thus not expected to contain SDD data. The nature of the DCM can be recognized by other software elements using a function of the DCM application programmable interface (API) called DCM::GetDeviceClass.

According to the HAVi specification, a DCM or FCM registers itself with its local Registry. During the registration, the DCM provides a certain amount of information, among others a data structure called TargetlD, which indicates whether the registering software element is a device (DCM), a functional component of a device (FCM) or an application module. In the first two cases, the TargetlD data structure also indicates whether the DCM or FCM is compliant with the IEC 61883 standard which among other things defines the transport of isochronous streams (e.g. audio and video streams) over a IEEE 1394 network. No two TargetlD data structures are to be the same.

The HAVi specification requires that the TargetlD structure contain a global unique identifier ('GUID') which is a 64-bit quantity identifying uniquely a IEEE 1394 device. This GUID identifier is stored in a device's configuration ROM and is persistent over network resets. Within the context of streaming, the GUID given in the target ID identifies the physical HAVi device to which the stream is to be sent or from which the stream is to be received. For certain device types, this may not be the host device of the DCM associated with the stream source or sink device but the final target device GUID.

DCMs representing UPnP devices do not have an own GUID identifier. However, as the bridge will also send to the HAVi network streams received from the UPnP network, or receive streams from HAVi devices to be passed on to UPnP devices, these DCMs representing UPnP devices have to use the bridge's GUID identifier in their TargetlD data structure.

Being in the home network environment, the bridge may typically be designed to send or receive and process audio and video streams, independently from its function as a bridge between the HAVi and the UPnP networks. It then has its own DCM, and this DCM will be of the type compliant with IEC 61883. During its registration, the DCM of the bridge itself will use its own GUID identifier.

In such a case, the device type of a DCM representing a UPnP device cannot be a DCM compliant with IEC 61883, because this would result of having two identical TargetlD data structures in the HAVi network. Even if the bridge's own DCM were not of the DCM_61883 type, the same problem occurs if the bridge is to handle more than two DCMs for UPnP devices.

It is proposed to declare DCMs of UPnP devices as non-61883 DCMs. In this case, the TargetlD data structures of these DCMs still contain the bridge's GUID identifier (the bridge being the host of these DCMs), but the TargetlDs are distinguished by a further parameter, which is an identifier internally attributed to each DCM by the bridge.

The fact that the UPnP devices are shown as non-61883 devices on the HAVi side of the network does not mean that these devices may not send or receive streams, only that these streams are not necessarily compliant with IEC 61883.

In a similar fashion, proxy FCMs representing UPnP services are declared as non 61883 FCMs.

As mentioned, the HAVi specification defines five different values for the target software element type (DCM_61883, DCM_NON61883, FCM61883, FCM_NON61883 and AM). As a variant embodiment solving the above problem, additional target types are defined:
DCM_PROXY or DCM_NON1394― identifies a DCM as representing a UPnP device (or a device on another non-HAVi network)
FCM_PROXY or FCM_NON1394 ― identifies an FCM as representing a UPnP service (or a service or functionality on another non-HAVi network)
On the UPnP side, such a problem does not exist, since the physical device is represented with a root device, which can contain several devices and services.

When it receives an event that a new proxy DCM or FCM has been created for a UPnP device or service, a HAVi application may want to obtain additional information regarding such a DCM or FCM. The reverse is also true, when a UPnP device or service is informed of a new proxy device or service handled by the bridge.

For this purpose, the bridge assembles information concerning each HAVi DCM or FCM or UPnP service or device for which it creates a proxy. This information is assembled before announcement of the creation of the proxy software element.

The bridge carries out the following steps:
(a) For a new HAVi software element, the bridge requests the element's attributes from the Registry (using the Registry::RetrieveAttributes function).
   For a new UPnP software element, the bridge has received a description of the software element through the simple service discovery protocol 'alive' message mentioned earlier. This description is a universal resource locator (URL) written in XML, and is, according to the present embodiment, parsed by the bridge in order to extract all relevant information.
(b) The bridge creates the new proxy software element.
(c) The bridge sends an event to announce the availability of the proxy software element, using the 'NewSoftwareElement' event message on the HAVi network (for a proxy representing a UPnP software element) or by using a 'ssdp::alive' multicast message on the UPnP network (to announce a proxy for a HAVi software element). In conformity with UPnP, this multicast message is to be reiterated periodically.

The event mapping is given in Table 1:

**Table 1**

| HAVi | UPnP |
|---|---|
| NewSoftwareElement (Registry) This event gives the SEID of the new software element(s). The logical action after receiving such an event is a Registry::RetrieveAttributes on each SEID in order to have more information about the software element. | ssdp::alive This multicast message gives the type of the new entity and the URL for its complete description (written in XML). So the next logical action is a HTTP GET call on this URL. So there is one ssdp::alive message for each entity (root device, device, service) |
| GoneSoftwareElement (Registry) This event gives the SEID of the software elements which unregistered. | ssdp::byebye If the entity cannot send this message (plug off), the availability of the entity will end with the expiration of the ssdp::alive polling timer. |

Transmission of messages over the bridge will now be described. When a HAVi software element sends a message to a proxy DCM or FCM, the bridge translates this message into a UPnP message. This message is based on the Simple Object Access Protocol if it concerns device or service control, or on the General Event Notification Architecture protocol if it concerns event notification. The reverse applies when a UPnP device or service addresses a proxy device or service of the bridge.

This translation does not apply to all messages. In the following non-restrictive example, a HAVi message will not be forwarded but answered directly by the proxy element : the proxy FCM receives a Fcm::GetDcmSeid command ; it answers giving back the SEID of the proxy DCM to which it belongs.

The HAVi Unique Identifier (HUID) is used to uniquely identify a DCM, FCM or Application Module. A HUID is created for each HAVi proxy of a UPnP device or service. The HUID identifier comprises the TargetlD and a number of other identifiers: 'Interfaceld', 'Vendorld', 'n1Uniqueness', 'n2Assigner'. 'n1Uniqueness' is set to TRUE, and 'n2Assigner' is set to NONE for the DCM and to NONE or DCM for the FCM. Consequently, messages requesting transmission of the HUID of a HAVi proxy of a UPnP device will be treated as messages requesting transmission of a SEID identifier.

At least the following messages sent by HAVi entities will not be forwarded to the UPnP side, but directly answered by the bridge:
Fcm::GetDcmSeid
Dcm::GetHuid
Dcm::GetFcmSeidList
Fcm::GetHuid

In order to achieve proper translation, an equivalence has to be established between the HAVi API and the UPnP API. A direct one-to-one correspondence will not always be possible, so the bridge will either have to emulate a single message with a plurality of messages to obtain an appropriate result, or send back a response to the initial message informing the sender that his request cannot be processed.

The equivalence ― when existent - between the HAVi VCR API, the HAVi Audio/Video disk APi and the UPnP AVTransport API is given in Table 2:

**Table 2**

| **HAVi VCR API** | **HAVi AV Disc API** | **UPnP AVTransport API** |
|---|---|---|
| | GetltemList | |
| Play The AVDisc::Play has the PlayMode parameter input directly, so only one call is used | | Play SetPlayMode |
| Record The AVDisc::Record has the RecordMode parameter input directly, so only one call is used | | Record SetRecordMode |
| FastForward | | Seek |
| FastReverse | | Seek |
| VariableForward | | Scan |
| VariableReverse | | Scan |
| Stop A lot of parameters are needed for the AVDisc | | Stop |
| RecPause Specific for record state. To pause in playback state, use VariableForward | | Pause The pause is for playback and record states. It is not a toggle. |
| Skip | | Seek |
| | InsertMedia | LoadMedia |
| EjectMedia | | EjectMedia |
| GetState Returns the transport state and transport mode associated | | GetTransportlnfo Returns the transport state and speed GetTransportSettings Returns the transport mode |
| GetRecordingMode | | |
| SetRecordingMode | | SetRecordQualityMode |
| GetFormat Returns the media type and the write status The number of tracks is returned by AVDisc::GetltemList | | GetMediaInfo Returns the number of tracks (for tapes, it is '1'), the media type and the write status |
| GetPosition | | GetPositionlnfo |
| ClearRTC | | ResetRelativePosition |
| | Erase | Erase |
| | PutltemList | |
| GetCapability Returns the play and record formats To get the record quality modes, use VCR::GetRecordingMode. | | GetDeviceCapabilities Returns the play and record formats, and the record quality modes |
| GetRejectlnfo | | |
| | | AvailableForRecording |

Equivalence between events relating to the APIs given in Table 2 is listed in Table 3:

**Table 3**

| **HAVi VCR Events and attribute notifications** | **HAVi AV Disc Events and attribute notifications** | **UPnP AVTransport Events** |
|---|---|---|
| VcrStateChanged Gives the Transport State and the Media Format of the tape. The Transport State includes the UPnP CurrentRecordQualityM ode and TransportPlaySpeed. The Media Format corresponds to the UPnP CurrentMediaFormat | AvDiscStateChanged Gives the Transport State, direction and plug number The Transport State includes the UPnP PlayMode, RecordMode and TransportPlaySpeed | TransportState PlayMode RecordMode TransportPlaySpeed CurrentMediaFormat |
| Vcr::currentState notification attribute Equivalent to the VcrStateChanged event | AvDisc::currentState notification attribute Equivalent to the AvDiscStateChanged event | |
| | AvDiscltemListChanged | |
| | | CurrentMediaWriteStatus |
| | | NumberOfTracks CurrentTrack |
| Vcr::counterReset notification attribute Not used for normal increase/decrease of the counter | | RelativeTimePosition AbsoluteTimePosition RelativeCounterPosition AbsoluteCounterPosition Not known restrictions on them |
| Vcr::recordingMode notification attribute | | CurrentRecordQualityMode |
| Vcr::condensation | | |

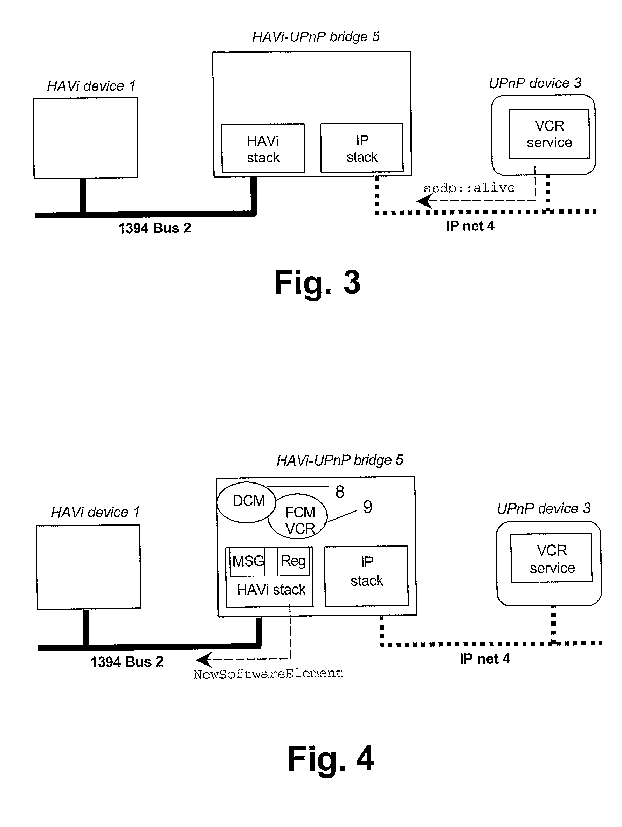

Figures 2 to 5 illustrate the process triggered at the bridge by connecting a UPnP device to the UPnP network. In the initial network of figure 2, only HAVi device 1 is connected to the HAVi network, and no device is connected to the IP network. The HAVi device is represented by the bridge to the UPnP network as a proxy device 15, comprising a proxy service 16 and a proxy connection manager service 10. For the clarity of the explanation, figures 3 to 5 do not show proxy software elements corresponding to the HAVi device on the UPnP side of the bridge, unless required for the explanation.

As illustrated by figure 3, a UPnP device 3, in this case a UPnP VCR, is connected to the IP network 4. The bridge 5 is notified of this connection via the SSDP protocol. The bridge then analyzes the XML description of the device and discovers that the newly connected device is a VCR device including a VCR service.

As illustrated by figure 4, the bridge creates a HAVi DCM 8 and a HAVi VCR FCM 9 as proxy software elements, in order to simulate the UPnP VCR device and service. The two new HAVi software elements then request a SEID identifier from the bridge's Messaging System ('MSG' in figure 4) and register with the bridge's Registry ('Reg'). This registration causes the Registry to send a NewSoftwareElement event over the HAVi network.

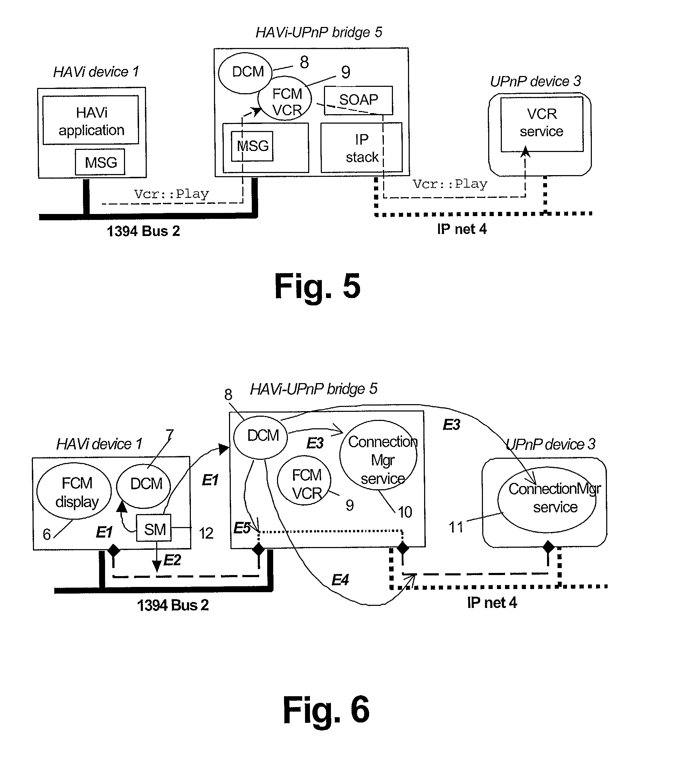

When an application of the HAVi device 1 wishes to send a PLAY command to the UPnP VCR 3, it does so by sending a 'VCR::Play' message using its own Messaging System to the VCR FCM of bridge 5. The bridge's application then sends an appropriate control message to the UPnP VCR service. This is illustrated by figure 5.

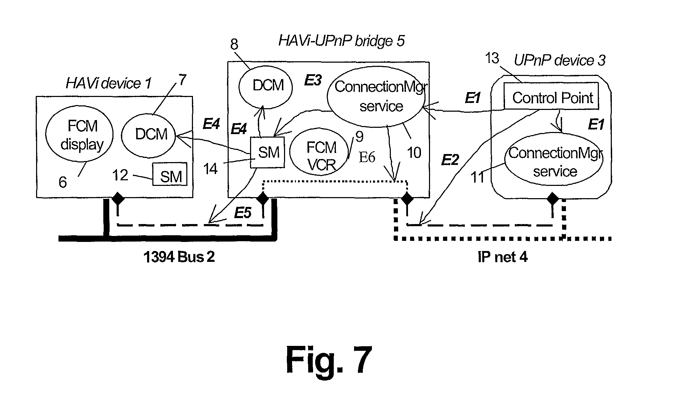

Stream establishment is illustrated by figures 6 and 7, with figure 6 concerning the establishment of a stream initiated by HAVi device 1 and figure 7 concerning the establishment of a stream initiated by UPnP device 3.

In the case of figure 6, the application of device 1 ― for example a user interface ― calls the 'FIowTo' function of its Stream Manager (SM), which is the software element in HAVi in charge of establishing streams. The parameters of the FlowTo function call are identifiers of the plugs of the source and sink FCMs. This information is provided in data structures called 'FcmPlug'. The FCMs to be connected (in this case the FCM of the HAVi device 1 and the proxy FCM of the bridge representing the UPnP device 3) are identified using 'TargetlD' data structures, which have already been mentioned. The TargetlD of the source plug indicates the GUID identifier of the bridge.

The Stream Manager triggers the required internal plug connections at the level of the involved DCMs and FCMs, using 'DCM::Connect' function calls. The Stream Manager also makes reservations of the IEEE 1394 isochronous resources and updates the IEC 61883 plug control registers of the devices involved (Steps E1 and E2).

The corresponding connection process on the UPnP network is triggered, according to the present embodiment, by the function call 'DCM::Connect'. to the proxy DCM 8. The proxy DCM calls UPnP connection manager services 10 and 11, which are respectively part of the HAVi device 1 representation as a UPnP device (i.e. connection manager service 10 is a proxy connection manager service) and of the UPnP VCR 3. The function called is 'ConnectionMgr::PrepareForConnection' (step E3). The proxy DCM also establishes the IP connection (step E4) and the internal connection within the bridge (E5).

Although in the example of figure 6, the proxy DCM establishes the internal bridge connections, according to a variant embodiment, this task is performed by a dedicated software module of the bridge. This module centralizes all internal stream connections, which simplifies processing and bandwidth resource management.

It is to be noted that the order of some of the steps could be changed, while achieving the same result.

Figure 7 shows the steps for establishing a stream when initiated by the UPnP device 3. A Control Point 13 (i.e. a UPnP controller) invokes the 'ConnectionMgr::PrepareForConnection' command of UPnP, at both the sink and source connection services 10 and 11 (step E1). It also sets up the IP connection (step E2). The reception by the bridge 5 of the command from the Control Point 13 triggers a function call to the Stream Manager 14 of the bridge ('FlowTo' function ― step E3). As in the previous case, the Stream Manager calls the DCMs and establishes the 61883 connection between the HAVi device and the bridge. The internal connection is set up (step E6).

In both cases of figure 6 and 7, the proxy DCM and the proxy UPnP device have to determine whether they should act upon reception of a DCM::Connect function call, respectively a ConnectionMgr::PrepareForConnection function call.

For example, the proxy DCM should establish a connection when receiving a command from the Stream Manager of device 1, but not when the command is received from the bridge's Stream Manager 14 when the UPnP device initiated the connection. Similarly, when the Connection Service 10 receives a ConnectionMgr::PrepareForConnection function call from DCM 8, it should establish the connection on the UPnP network, but it should do nothing when the function call is received from the Control Point of UPnP device 3.

The description above has focused mainly on HAVi DCM/FCM and UPnP device/service equivalence. It is to be noted that some HAVi Software Elements other than DCMs and FCMs may require proxies on the UPnP side. Also, proxy UPnP devices may have to integrate services in addition to proxy services representing HAVi FCMs. For instance, UPnP devices require a Connection Manager service to be able to do some streaming, though HAVi uses the system element StreamManager. Other services may be added as well.

## Claims

1. Method for bridging a HAVi network and a UPnP network, both networks being connected to a bridge device representing software elements from one network on the other network, comprising, at the level of the bridge device, the steps of:
- detecting UPnP devices connected to the UPnP network;
- creating a proxy HAVi device control module for each UPnP device for representing the UPnP devices on the HAVi network;
**characterized by** the step of:
- registering the proxy HAVi device control modules, wherein the proxy HAVi device control modules are declared as being of the legacy device type.

2. Method according to claim 1, further comprising the steps of:
- detecting at least certain types of UPnP services on the UPnP network;
- creating a proxy HAVi functional component module for each detected UPnP service, wherein a proxy HAVi functional component module representing a given UPnP service is integrated into a proxy HAVi device control module representing the UPnP device associated with the UPnP service on the UPnP network;
- announcing the proxy HAVi functional component modules.

3. Method according to one of the claims 1 or 2, further comprising the steps of:
- detecting HAVi device control modules and HAVi functional component modules on the HAVi network;
- creating a proxy UPnP device for each HAVi device control module and a UPnP service for each HAVi functional component module;
- announcing the proxy UPnP devices and services according to UPnP rules.

4. Method according to one of the claims 1 to 3, wherein proxy HAVi software elements representing UPnP devices and/or services are declared as being of the non-61883 type.

5. Method according to one of the claims 1 to 4, further comprising the step, before registration of a proxy software element, of requesting descriptive data relative to the proxy software element and of registering the proxy software element only after reception of the descriptive data.
